# EUROPEAN PATENT SPECIFICATION

(11) **EP 0 721 281 B1**
(45) Date of publication and mention of the grant of the patent: **16.05.2001**
(21) Application number: 96101284.6
(22) Date of filing: 25.06.1991
(51) Int. Cl.: H04N 5/272

(54) **Image pickup apparatus for synthesizing image signals and image signal processing system**
Bildaufnahmevorrichtung zur Bildsignalerzeugung und Bildsignalverarbeitungssystem
Appareil de prise de vue pour synthétiser des signaux d'image et système de traitement des signaux d'image

(30) Priority: 31.08.1990 JP 23168090
(43) Date of publication of application: 10.07.1996
(62) Divisional of application: 91110488.3
(73) Proprietor: SANYO ELECTRIC CO., LTD., Moriguchi-shi, Osaka (JP)
(72) Inventor: Ito, Hiroya, Anpachi-gun, Gifu (JP); Higashitsutsumi, Yoshihito, Sunnyvale, CA 94087 (US)
(74) Representative: Glawe, Delfs, Moll & Partner

(56) References cited:
- EP-A- 0 134 008
- US-A- 3 487 162
- US-A- 4 860 101

## Description

### BACKGROUND OF THE INVENTION

### Field of the Invention:

The present invention relates to an image pickup apparatus for superimposing a plurality of image signals one on another to display a plurality of reproduced scenes on one screen, and an image signal processing system.

### Description of the Related Art:

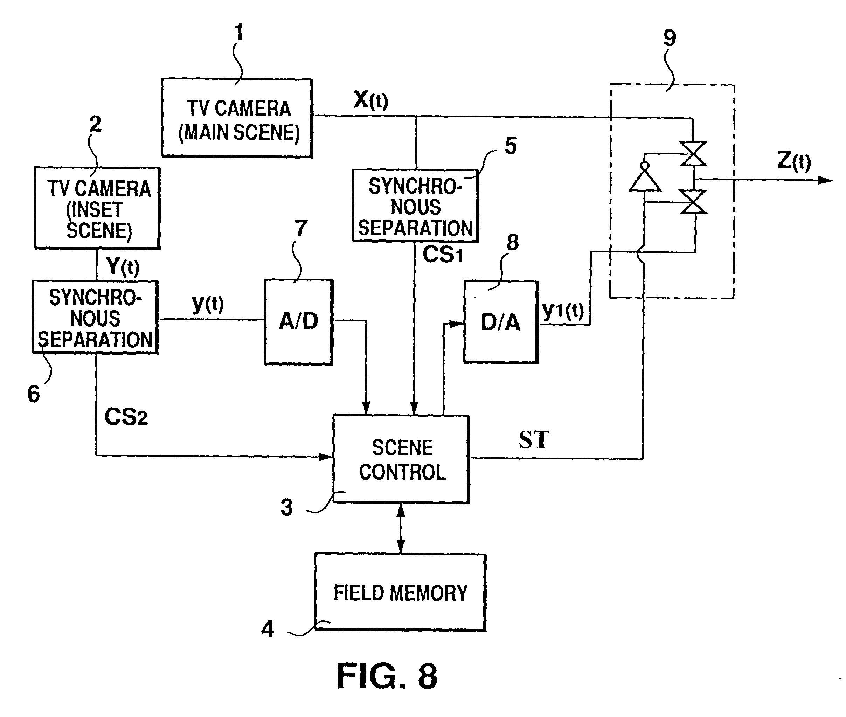

Fig. 8 is a block diagram of the schematic arrangement of an image signal processing circuit for superimposing an image signal providing an inset scene on another image signal providing a main scene, which circuit has been used by the inventors.

The circuit comprises a TV camera 1 for taking an image signal X₍ₜ₎ providing a main scene, the camera 1 being adapted to be actuated by a synchronization signal which is prepared in the camera itself. The image signal X₍ₜ₎ consists of such a synchronizing signal and an image component superimposed on the synchronizing signal. The circuit also comprises another TV camera 2 for taking an image signal Y₍ₜ₎ providing an inset scene. This inset scene camera is similarly actuated by a synchronizing signal which is generated in the inset scene camera itself. The image signal Y₍ₜ₎ also includes the synchronizing signal.

The image signals X₍ₜ₎ and Y₍ₜ₎ are respectively outputted from the TV cameras 1 and 2 which are independently actuated at different timings. Since these image signals are thus different in scan timing from each other, they cannot be superimposed one on another as they are. In order to overcome such a problem, the image signal processing circuit further comprises a scene control circuit 3 which causes the image signal Y₍ₜ₎ to be once stored in a field memory 4. The image signal Y₍ₜ₎ is then read out of the field memory 4 in accordance with the synchronizing signal in the image signal X₍ₜ₎. As a result, the scan timing of the image signal Y₍ₜ₎ will be consistent with that of the image signal X₍ₜ₎. The synchronizing signal CS1 of the image signal X₍ₜ₎ is separated from the image signal X₍ₜ₎ at a synchronous separation circuit 5 and then supplied to the scene control circuit 3.

On the other hand, the image signal Y₍ₜ₎ is divided into a synchronizing signal component CS2 and an image signal component y₍ₜ₎ at a synchronous separation circuit 6. The image signal component y₍ₜ₎ is supplied to the scene control circuit 3 through an A/D converter 7 while the synchronizing signal CS2 is provided directly to the scene control circuit 3.

A digital image component is written in the field memory 4 in accordance (or in synchronism) with the synchronizing signal CS2. A digital image signal is read out from the field memory 4 in accordance with the synchronizing signal CS1 and then converted into an analog image signal y₁₍ₜ₎ by a D/A converter 8, which signal is in turn fed to a synthesizing circuit 9.

The image signal y₁₍ₜ₎ is one for forming an inset scene smaller than a main scene defined by the image signal X₍ₜ₎ and includes horizontal and vertical image signal components which are reduced by thinning or synthesizing any suitable number of bits from the data of the image signal y₁₍ₜ₎. The scene control circuit 3 generates a selection pulse ST in synchronism with the effective imaging period in the image signal y₁₍ₜ₎, the selection pulse ST being then supplied to the synthesizing circuit 9. The synthesizing circuit 9 replaces the main scene image signal X₍ₜ₎ with the image signal component y₁₍ₜ₎ in response to the selection pulse ST. In other words, the synthesizing circuit 9 is actuated by the selection pulse ST such that it will selectively output the image signal X₍ₜ₎ from the TV camera 1 or the image signal y₁₍ₜ₎ from the D/A converter 8. In such a case, the image signal X₍ₜ₎ is steadily selected, but the image signal y₁₍ₜ₎ is selected only within its effective imaging period. In such a manner, there is provided an image signal Z₍ₜ₎ for displaying the inset scene of the image signal y₁₍ₜ₎ on a part of the main scene.

The position of the main scene at which the inset scene is displayed is determined by a timing at which the image signal y₁₍ₜ₎ is outputted. It can be set by setting a delay on the output of the image signal y₁₍ₜ₎ relative to the horizontal and vertical scan timings of the synchronizing signal CS₁. For example, if the signal y₁₍ₜ₎ is outputted with a delay relative to the horizontal scan timing of the synchronizing signal CS₁, the position of the inset scene is moved on the main scene rightwardly. On the contrary, if another delay is provided relative to the vertical scan timing, the inset scene is moved on the main scene downwardly.

In such an arrangement, a part of the main scene can be replaced by an inset scene, the main and inset scenes being simultaneously displayed on one monitor screen.

However, such an arrangement is required to once store the image signal X₍ₜ₎ in the field memory 4. This additionally requires the A/D converter 7 for converting the image signal y₍ₜ₎ into a digital value and the D/A converter 8 for reconverting the digital value into the image signal y₁₍ₜ₎. In general, the A/D and D/A converters 7, 8 used to process the image signals require special circuits for meeting their highspeed requirements, leading to increase of cost.

These converters also contributes to increase of the entire scale of the system. Thus, the A/D and D/A converters cannot be easily installed in any small-sized TV camera. This requires a separate unit for processing the image signals, further leading to increase of manufacturing cost.

An image pickup apparatus according to the precharacterizing part of claim 1 is disclosed in US-A-4 860 101.

### Summary of the invention

The above objects are achieved by an image pickup apparatus according to claim 1 and an image signal synthesizing system according to claim 5. The dependent claims are related to further advantageous aspects of the present invention.

In accordance with the present invention, no synchronization of image signals at the signal processing stage is required since an inset scene image signal is previously given in synchronization with a main scene image signal. This can omit any circuit for temporally storing the image signals. There is thus provided an extremely simplified circuit for displaying both the main and inset scenes simultaneously on a display screen.

In accordance with the present invention, furthermore, the processing of image signals provided by the solid state image pickup device can be easily made since the image pickup device itself has a function for superimposing the image signals together. For example, this enables an image from a monitor camera as in a door phone to be displayed on the screen of a conventional TV receiver. Thus, an inexpensive monitoring system having a simplified structure can be provided.

In accordance with the present invention, an extremely simple circuit can realize a so-called picture-in-picture system which displays a plurality of images on a screen utilizing a communication line.

### BRIEF DESCRIPTION OF THE DRAWINGS

Fig. 1 is a block diagram of a solid state image pickup apparatus constructed in accordance with the present invention.

Fig. 2 is a block diagram of a timing generator. Fig. 3 is a diagrammatic view of a scene displayed.

Fig. 4 is a timing diagram of the operation of the system.

Fig. 5 is a circuit diagram of an image signal processing circuit constructed in accordance with the present invention.

Fig. 6 is a view illustrating the operation of the circuit shown in Fig. 5.

Fig. 7 is a circuit diagram of another image signal processing circuit including a plurality of image pickup units connected therewith.

Fig. 8 is a circuit diagram of still another image signal processing circuit.

### DETAILED DESCRIPTION OF THE PREFERRED EMBODIMENTS

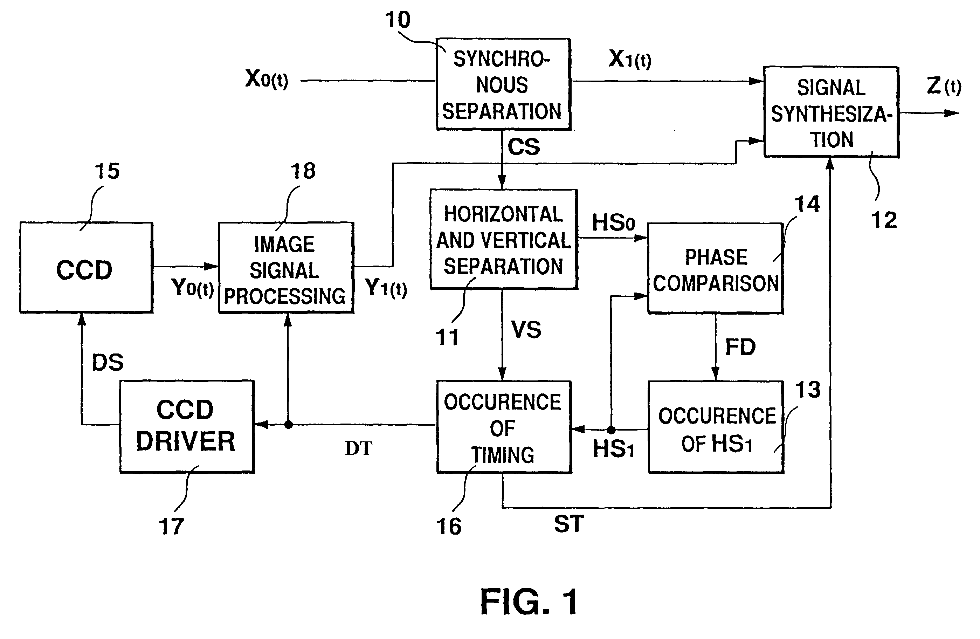

Referring first to Fig. 1, there is shown an example of a solid state image pickup apparatus.

An image signal X₀₍ₜ₎ for forming a main scene is provided by a TV camera (not shown) which is operated by a user at its independent timing. The image signal X₀₍ₜ₎ consists of an image signal component and a synchronizing signal component.

A synchronizing signal separating circuit 10 is provided to separate the synchronizing signal CS from the image signal X₀₍ₜ₎, the synchronizing signal so separated being then supplied to a horizontal and vertical separation circuit 11. The synchronizing signal separating circuit 10 also provides an image signal X₁₍ₜ₎ including a synchronizing signal to a signal synthesizing circuit 12. The horizontal and vertical separation circuit 11 divides the synchronizing signal CS from the synchronizing signal separating circuit 10 into a horizontal synchronizing signal HS₀ and a vertical synchronizing signal VS. The horizontal synchronizing signal HS₀ is fed to a phase comparing circuit 14 together with a horizontal synchronizing signal HS₁ from a horizontal synchronizing signal generating circuit 13. The output FD of the phase comparing circuit 14 is provided to the horizontal synchronizing signal generating circuit 13. As a source, the horizontal synchronizing signal generating circuit 13 includes, for example, a VCO (Voltage Controlled Oscillator) having its oscillation frequency which is controlled in response to the comparator output FD such that the horizontal synchronizing signal HS₁ is synchronized with the horizontal synchronizing signal HS₀ externally provided. Consequently, the horizontal synchronizing signal generating circuit 13 defines a phase locked loop with the phase comparator circuit 14.

On the other hand, an image signal Y₀₍ₜ₎ for forming an inset scene is provided from a CCD 15 which is actuated by a drive clock DS from a CCD driver 17 which is in turn operated according to a drive timing DT from a timing generating circuit 16. Thus, the CCD 15 supplies an image signal processing circuit 18 with the image signal Y₀₍ₜ₎ in synchronization with the drive timing DT. The image signal processing circuit 18 forms a new image signal Y₁₍ₜ₎ by subjecting the image signal Y₀₍ₜ₎ to various processing steps such as sample hold, gamma correction and others, the new image signal Y₁₍ₜ₎ being then supplied to a signal synthesizing circuit 12.

The CCD 15, which is used to provide the image signal Y₀₍ₜ₎ for displaying a smaller or inset scene, may generally be one having a reduced number of pixels. Time required to output signals for all the pixels through the CCD driver 17 is relatively short in comparison with the signal X₀₍ₜ₎.

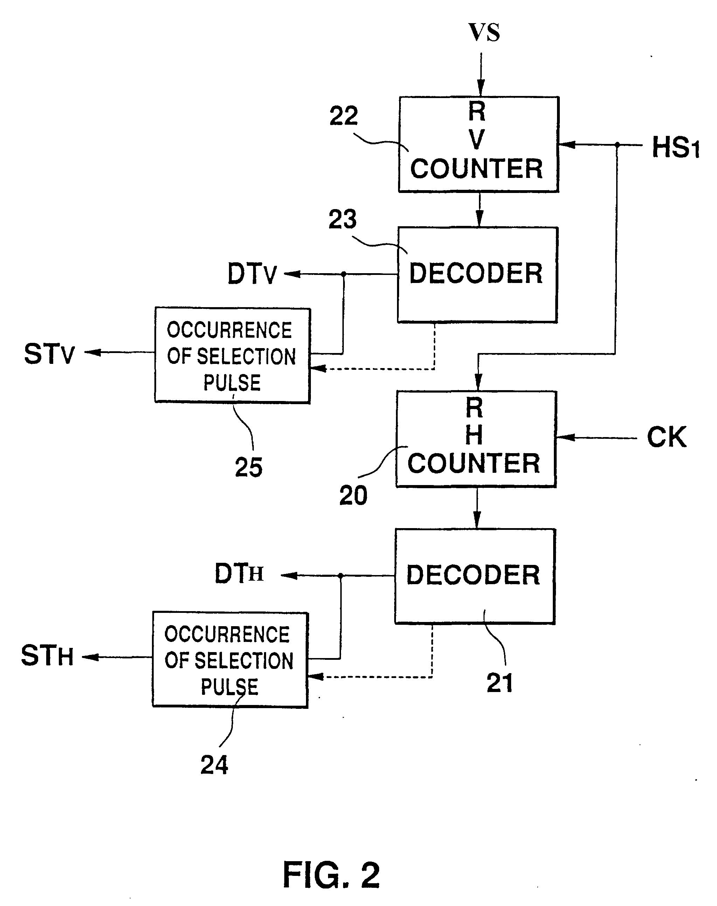

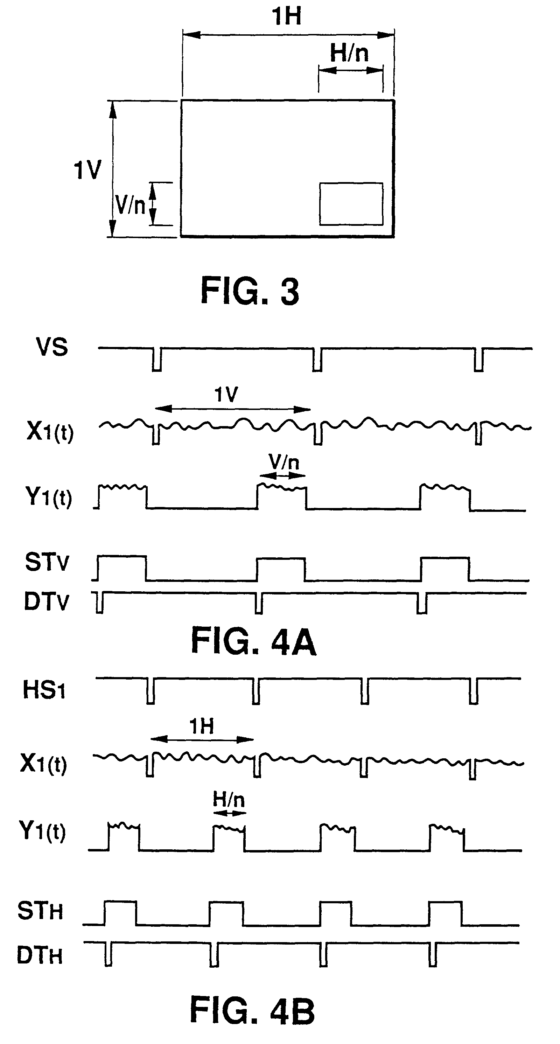

The timing generating circuit 16 operates in accordance with the horizontal and vertical synchronizing signals HS₁, VS so as to generate horizontal and vertical scan drive timings DT_{H}, DT_{V} synchronized with the respective synchronizing signals HS₁, VS (see Fig. 4A and Fig. 4B). In other words, the timing generating circuit 16 is adapted to delay the horizontal and vertical synchronizing signals HS₁, VS by any appropriate time period so that the position of the inset scene is determined on the screen. For example, the circuit 16 may include a counter and a decoder, as shown in Fig. 2.

Referring to Fig. 2, a horizontal counter 20 is reset by the horizontal synchronizing signal HS₁ and started by a basic clock CK from the source of oscillation in the horizontal synchronizing signal generator 13, with the output of the counter 20 being inputted into a decoder 21. The decoder 21 decodes the output of the horizontal counter 20 into a horizontal scan drive timing DT_{H}. More particularly, when the count of the counter 20 reaches a predetermined value, the decoder 21 outputs pulses corresponding to the number of basic clocks CK. Thus, the count of the counter 20 at which the decoder 21 outputs a drive timing DT_{H} is set to be smaller than the number of basic clocks CK for one horizontal period. Therefore, the drive timing DT_{H} will be set such that it is delayed from the horizontal synchronizing signal HS₁ by a period integer times that of the basic clocks CK. The output timing of the image signal Y₁₍ₜ₎ will be set such that it is delayed by a predetermined period from the output timing of the horizontal synchronizing signal HS₁ or the horizontal scan of the image signal X₁₍ₜ₎.

The vertical counter 22 is reset by the vertical synchronizing signal VS and initiated by the horizontal synchronizing signal HS₁, with the output of the counter 22 being inputted into a decoder 23. By decoding the output of the counter 22, the decoder 23 generates a vertical scan drive timing DT_{V} which is delayed from the vertical synchronizing signal VS by a period integer times the horizontal scan period. The output timing of the image signal Y₁₍ₜ₎ will be set to be delayed from the vertical scan output timing of the image signal X₁₍ₜ₎ by a predetermined period.

On the other hand, selection pulse generating circuits 24 and 25 are provided to generate selection pulses ST_{H} and ST_{V} when the circuits 24 and 25 receive the horizontal and vertical scan drive timings DT_{H} and DT_{V}, respectively. The selection pulse generating circuits 24 and 25 control the signal synthesizing circuit 12 so as to select and output the image signal Y₁₍ₜ₎ in synchronism with its output timing. Since the time at which the signal Y₀₍ₜ₎ is outputted from the CCD 15 for the inset scene is previously known, each of the selection pulse generating circuits 24 and 25 raises a selection signal ST when received a driving timing DT and diminishes the selection signal ST on termination of the output of the signal Y₀₍ₜ₎. The termination of the output may be determined on receiving a signal indicative of when the counts of the counters 20 and 22 reach preselected values. The selection pulse generating circuits 24 and 25 switch the signal synthesizing circuit 12 from a state under which it steadily selects the main scene image signal X₁₍ₜ₎ to another state under which the signal synthesizing circuit 12 selects the image signal Y₁₍ₜ₎, at a timing in accordance with the drive timings DT_{H} and DT_{V}. After passage of a predetermined period, the signal synthesizing circuit 12 is again switched to the state under which it selects the image signal X₁₍ₜ₎. An image signal Z₍ₜ₎ is thus provided which is formed by replacing a part of the image signal X₍ₜ₎ with the image signal Y₁₍ₜ₎.

If the size of the inset scene is a factor of n on that of the main scene as shown in Fig. 3, the amount of information in the image signal Y₁₍ₜ₎ becomes a factor of n on that of the image signal X₍ₜ₎. Thus, the CCD 15 has the number of pixels which corresponds to a factor of n on that of the main scene. However, the image signal Y₁₍ₜ₎ for the inset scene may be obtained by thinning image signals at any suitable intervals on the signal processing step. The image signal Y₁₍ₜ₎ will have the information of image during periods H/n and V/n, in opposition to the image signal X₁₍ₜ₎ which has the information of image during the respective one of the horizontal and vertical scan periods (1H and 1V), as shown in Figures 4A and 4B. Thus, the selection pulses ST_{H} and ST_{V} are set in synchronism with the effective period of the image signal Y₁₍ₜ₎. The position of the inset scene in which it is to be displayed on the screen is determined depending on the timing of the raise of the image signal Y₁₍ₜ₎, that is, a period of time by which the drive timings DT_{H} and DT_{V} are respectively delayed from the horizontal and vertical synchronizing signals HS₁ and VS. Thus, the position of the inset scene to be displayed is variable depending on the decoded values from the decoders 21 and 23. For example, when the counters 20 and 22 are in up-count state, the inset scene will be moved rightwardly on the screen if the decoded value in the decoder 21 is increased and downwardly if the decoded value in the decoder 23 is increased.

Although the present embodiment has been described as to the drive timings DT_{H} and DT_{V} provided by the respective counters, they may be obtained similarly by using any other suitable delay circuit such as shift register or the like which can delay the horizontal and vertical synchronizing signals HS₁ and VS.

The embodiment of the present invention will now be described with reference to the drawings.

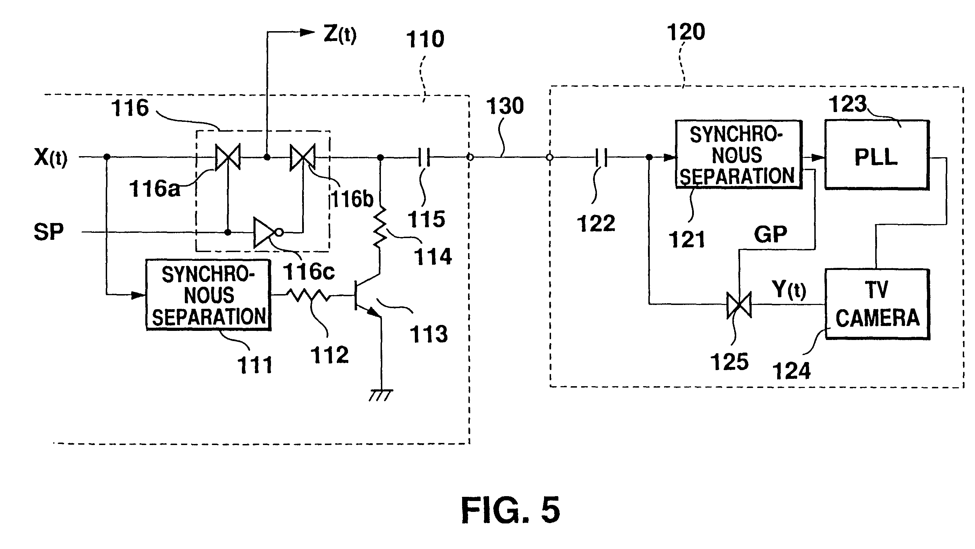

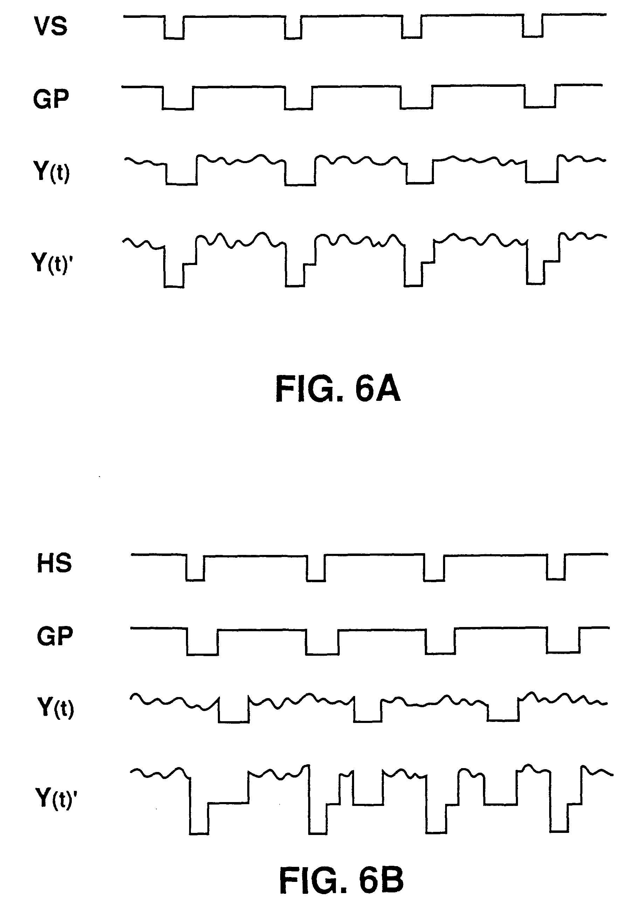

Fig. 5 is a circuit diagram of an image signal processing circuit constructed in accordance with the present invention while Fig. 6 is waveforms illustrating the operation of the image signal processing circuit.

A first image signal X₍ₜ₎ is provided, for example, by an image pickup device such as TV camera or the like. The first image signal X₍ₜ₎ comprises a synchronizing signal component and an image signal component. The first image signal X₍ₜ₎ may be a signal reproduced from a recording medium or a signal received from a television broadcast.

A synchronous separation circuit 111 is provided to separate a synchronizing signal component from the image signal X₍ₜ₎ and to form a composite signal including vertical and horizontal synchronizing components. Such a composite signal is connected to the base of a transistor 113 through a resistor 112 and then fed from the collector of the transistor 113 to a communication line 130 through resistor 114 and capacitor 115. When passed through the capacitor 115, the DC component of the composite signal is removed therefrom.

On the other hand, another image signal is inputted into the system from the communication line 130 and further supplied to a synthesizing circuit 116 together with the first image signal X₍ₜ₎ whereat these image signals are selectively synthesized into a third image signal Z₍ₜ₎ in response to a selection pulse SP. The synthesizing circuit 116 comprises two gates 116a and 116b which are opened at "H", and an inverter 116c for inverting the selection pulse SP. If the selection pulse SP is "H", the gate 116a is opened. If the selection pulse SP is "L", the gate 116b is opened. Therefore, the synthesizing circuit 116 is controlled at a predetermined timing at which the scenes are synthesized. In such a manner, an image signal processing circuit 110 for synthesizing a plurality of image signals together is defined by the synchronous separation circuit 111, the synthesizing circuit 116 and the transistor 113.

An image pickup device 120 is connected with the image signal processing circuit 110 through the communication line 130 and includes a TV camera 124 which is externally actuated to provide an image signal Y₁₍ₜ₎ in synchronism with the synchronizing signal of the communication line 130. The TV camera 124 receives various types of timing pulses in synchronism with the synchronizing signal on the communication line 130. The scan timing of the image pickup element in the TV camera 124 is synchronized with the synchronizing signal to form the image signal Y₁₍ₜ₎ synchronized with the synchronizing signal. More particularly, the synchronous separation circuit 121 detects the synchronizing signal on the communication line 130 and supplies it to a PLL circuit 123 which in turn forms a timing pulse based on the synchronizing signal. Such a timing pulse is then inputted into the TV camera 124. After being outputted from the TV camera 124, the image signal Y₍ₜ₎ includes no synchronizing signal component and is fed to the communication line 130 through a capacitor 122. Since the image signal Y₍ₜ₎ is in synchronization with the synchronizing signal on the communication line 130, it will be time-division multiplexed over the synchronizing signal on the communication line 130.

When the image pickup device 120 is started or if the TV camera does not synchronize with the synchronizing signal for any reason, the image signal Y₍ₜ₎ may not be distinguished from the synchronizing signal when they are superimposed over each other on the communication line 130, resulting in the PLL circuit 123 being inoperative. To avoid such a problem, a gate circuit 125 is provided which suspends the output of the TV camera 124 when the synchronizing signal does not synchronize the operation of the TV camera 124. The gate circuit 125 receives gate pulses GP synchronizing with the vertical and horizontal synchronizing signals from the synchronous separation circuit 121. As shown in Figs. 6A and 6B, the occurrence of the image signal Y₍ₜ₎ is prevented at the raising timings of the vertical and horizontal synchronizing signals VS and HS. This will prevent the synchronizing signal component from being mixed with the image signal component when the image signal Y₍ₜ₎ is superimposed over the synchronizing signal.

If the image pickup device 120 is connected to the image signal processing circuit 110 as shown in Fig: 5, the latter can receive the image signal Y₍ₜ₎ synchronized with the image signal X₍ₜ₎ through a single communication line 130. These image signals are then synthesized by the synthesizing circuit 116 to form a new image signal Z₍ₜ₎ which can be used to display a reproduced scene corresponding to the image signal X₍ₜ₎ and another reproduced scene corresponding to the image signal Y₍ₜ₎ on the same screen. This means that the communication line for transmitting the image signals can be simplified in construction.

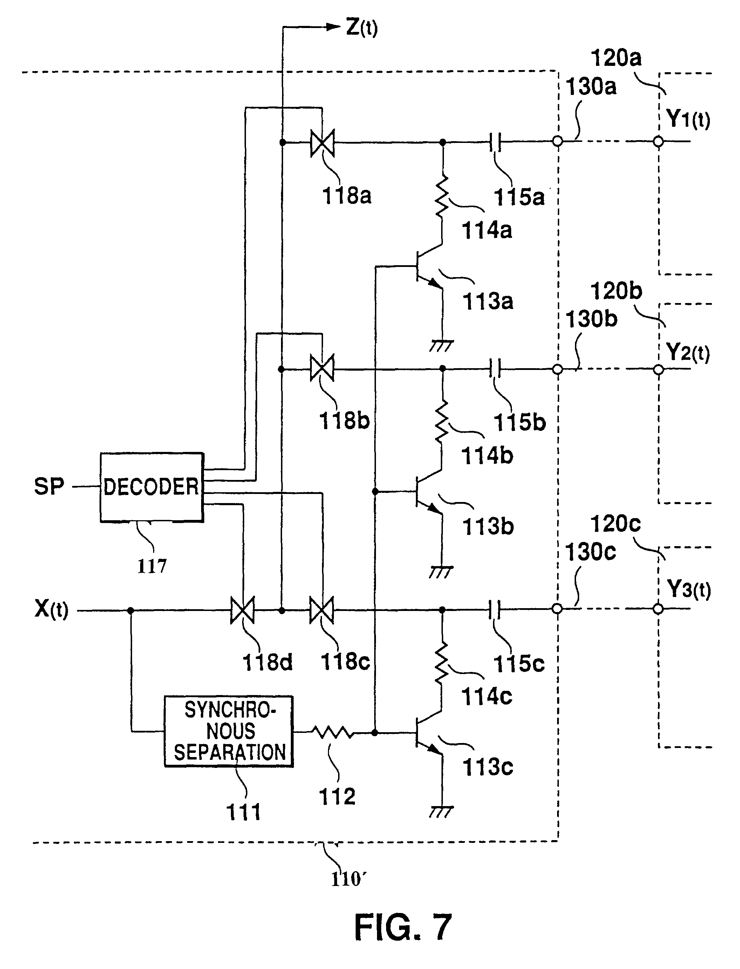

Fig. 7 shows the circuit diagram of an image signal processing circuit 110' which is connected with three image pickup devices 120a, 120b and 120c. These image pickup devices 120a, 120b and 120c have the same structure as that of the image pickup device shown in Fig. 1 and will not be illustrated and described in detail.

The image signal processing circuit 110' includes transistors 113a, 113b and 113c which correspond to the respective image pickup devices 120a, 120b and 120c. Each transistor has a base receiving a synchronizing signal from a synchronous separation circuit 111 through a resistor 112. The collector of each transistor 113a, 113b or 113c is connected with a communication line 130a, 130b or 130c through a resistor 114a, 114b or 114c and a capacitor 115a, 115b or 115c. An image signal Y₁₍ₜ₎, Y₂₍ₜ₎ or Y₃₍ₜ₎ from each image pickup device 120a, 120b or 120c is provided to a switch 118a, 118b or 118c through the communication line 130a, 130b or 130c via the capacitor 115a, 115b or 115c. Each switch 118a, 118b or 118c is adapted to switch pulses from a decoder 117 actuated by a selection pulse SP and connected with a common output line which is also connected with a switch 118d for receiving the image signal X₍ₜ₎. These switches 118a, 118b, 118c and 118d define a synthesizing circuit together with the decoder 117. Dependent on the timing switched by the selection pulse SP, the image signals Y₁₍ₜ₎, Y₂₍ₜ₎ and Y₃₍ₜ₎ are selectively synthesized with the image signal X₍ₜ₎ to form an image signal Z₍ₜ₎

Although the present embodiment has been described as to the image signal processing circuit connected with one or three image pickup devices, it may be connected with more than three image pickup devices. In such a case, each image pickup device will be connected with the image signal processing circuit through a signal communication line. This simplifies the communication network.

## Claims

1. An image pickup apparatus for providing first and second image signals, comprising:
a communication line (130);
a first block (110) including a first synchronous separation circuit (111) connected to said communication line (130) for separating a synchronizing signal from said first image signal, and delivery means for delivering said synchronizing signal from said first synchronous separation circuit to said communication line;
a second block (120) including a second synchronous separation circuit (121) connected to said communication line (130) and a TV-camera (124); wherein
said second synchronous separation circuit (121) separates said synchronizing signal from said communication line (130);
said TV-camera (124) is actuated by the synchronizing signal from said second synchronous separation circuit (121) and operates to provide said second image signal, synchronized with said synchronizing signal,
said second image signal being output into said communication line (130);
**characterized** in that,
said first and second image signals correspond to a main scene and an inset scene, respectively for synthesizing a plurality of reproduced scenes on one synthesized image;
said TV-camera comprises a solid state image pickup device having a plurality of pixels arranged into a matrix, wherein a number of rows of said plurality of pixels is 1/n times the predetermined number of rows of pixels on said synthesized image, n being greater than 1, and said solid state image pickup device outputs the charges for all the pixels within a part of the horizontal and vertical scanning periods.

2. An image pickup apparatus as defined in claim 1, wherein said TV-camera (124) outputs an image signal including no synchronizing signal.

3. An image pickup apparatus as defined in claim 1, further comprising a phase locked loop (123) for receiving said synchronizing signal and for outputting another synchronizing signal corresponding to said synchronizing signal and wherein said TV-camera (124) is actuated by the synchronizing signal from said phase locked loop.

4. An image pickup apparatus as defined in claim 1, further comprising gate means (125) disposed in the output path of said TV-camera (124) connected with said communication line (130) to provide the image signal thereto, said gate means (125) being adapted to block the image signal from said TV-camera (124).

5. An image signal synthesizing system comprising an image pickup apparatus according to claim 1, wherein a plurality of said second blocks (120) are connected with said first block (110) through the same communication line (130).

6. An image signal synthesizing system as defined in claim 5, wherein said delivery means includes a transistor (113) for changing the potential in a signal transmitting line connected with said communication line (130), in response to the synchronizing signal which has been separated from the first image signal by said first synchronous separation circuit (111).

## Patentansprüche

1. Bildaufnahmegerät zum Liefern von ersten und zweiten Bildsignalen mit:
einer Kommunikationsleitung (130),
einem ersten Block (110) einschließlich einer ersten Synchronabtrennschaltung (111), die mit der Kommunikationsleitung (130) verbunden ist, zum Abtrennen eines Synchronisierungssignals aus dem ersten Bildsignal und Liefermitteln zum Liefern des Synchronisierungssignals von der ersten Synchronabtrennschaltung zu der Kommunikationsleitung, einem zweiten Block (120) einschließlich einer zweiten Synchronabtrennschaltung (121), die mit der Kommunikationsleitung (130) und einer Fernsehkamera (124) verbunden ist, wobei
die zweite Synchronabtrennschaltung (121) das Synchronisierungssignal von der Kommunikationsleitung (130) trennt, wobei die Fernsehkamera (124) durch das Synchronisierungssignal von der zweiten Synchronabtrennschaltung (121) betätigt wird und arbeitet, um das zweite Bildsignal zu liefern, das mit dem Synchronisierungssignal synchronisiert ist,
wobei das zweite Bildsignal in die Kommunikationsleitung (130) ausgegeben wird,
dadurch **gekennzeichnet**, daß
die ersten und zweiten Bildsignale einer Hauptszene bzw. einer Einsatzszene entsprechen zum Synthetisieren einer Anzahl von Wiedergabeszenen auf einem synthetisierten Bild, wobei die Fernsehkamera eine Festkörperbildaufnahmevorrichtung aufweist mit einer Anzahl von Pixeln, die in einer Matrix angeordnet sind, wobei eine Anzahl von Reihen der Anzahl von Pixelns 1/n mal der vorgegebenen Anzahl von Reihen von Pixeln auf dem synthetisierten Bild ist,
wobei n größer ist als 1 und wobei die Festkörperbildaufnahmevorrichtung die Ladungen für alle Pixel innerhalb eines Teils der Horizontal- und Vertikalabtastperioden ausgibt.

2. Bildaufnahmegerät nach Anspruch 1,
wobei die Fernsehkamera (124) ein Bildsignal ausgibt, das kein Synchronisierungssignal aufweist.

3. Bildaufnahmegerät nach Anspruch 1,
mit ferner einer phasenverriegelten Schleife (123) zum Empfangen des Synchronisierungssignals und zum Ausgeben eines weiteren Synchronisierungssignals entsprechend dem Synchronisierungssignal und wobei die Fernsehkamera (124) durch das Synchronisierungssignal von der phasenverriegelten Schleife betätigt wird.

4. Bildaufnahmegerät nach Anspruch 1,
mit ferner Tormitteln (123), die in dem Ausgabeweg der Fernsehkamera (124), die mit der Kommunikationsleitung (130) verbunden ist, angeordnet sind, um dazu das Bildsignal zu liefern, wobei die Tormittel (125) das Bildsignal von der Fernsehkamera (124) sperren können.

5. Bildsignalsynthetisierungssystem mit einem Bildaufnahmegerät nach Anspruch 1,
wobei eine Anzahl der zweiten Blöcke (120) mit dem ersten Block (110) über dieselbe Kommunikationsleitung (130) verbunden ist.

6. Bildsignalsynthetisierungssystem nach Anspruch 5,
wobei die Liefermittel einen Transistor (113) zum Ändern des Potentials in einer Signalübermittlungsleitung aufweisen, die mit der Kommunikationsleitung (130) verbunden ist, in Abhängigkeit von dem Synchronisierungssignal, das von dem ersten Bildsignal durch die erste Synchronabtrennschaltung (111) abgetrennt wurde.

## Revendications

1. Appareil de prise de vue pour fournir un premier et un deuxième signaux d'image, comprenant :
une ligne de communication (130) ;
un premier bloc (110) incluant un premier circuit de séparation synchrone (111), connecté à la dite ligne de communication (130) pour séparer un signal de synchronisation du dit premier signal d'image, et des moyens d'amenée pour appliquer le dit signal de synchronisation provenant du dit premier circuit de séparation synchrone à la dite ligne de communication ;
un deuxième bloc (120) incluant un deuxième circuit de séparation synchrone (121), connecté à la dite ligne de communication (130) et à une caméra de télévision (124) ; dans lequel
le dit deuxième circuit de séparation synchrone (121) sépare le dit signal de synchronisation de la dite ligne de communication (130) ;
la dite caméra de télévision (124) est activée par le signal de synchronisation venant du dit deuxième circuit de séparation synchrone (121) et elle fonctionne pour fournir le dit deuxième signal d'image, synchronisé avec le dit signal de synchronisation ;
le dit deuxième signal d'image étant appliqué à la dite ligne de communication (130) ;
caractérisé en ce que
les dits premier et deuxième signaux d'image correspondent à une scène principale et une scène d'incrustation, respectivement, pour synthétiser une pluralité de scènes reproduites sur une même image synthétisée ;
la dite caméra de télévision comprend un dispositif de prise de vue à semi-conducteurs ayant une pluralité de pixels agencés en une matrice, dans laquelle un nombre de lignes de la dite pluralité de pixels est de 1/n fois le nombre prédéterminé de lignes de pixels sur la dite image synthétisée, n étant plus grand que 1, et le dit dispositif de prise de vue à semi-conducteurs fournit les charges pour tous les pixels à l'intérieur d'une partie des périodes de balayage horizontal et vertical.

2. Appareil de prise de vue selon la revendication 1, dans lequel la dite caméra de télévision (124) fournit un signal d'image ne comprenant pas de signal de synchronisation.

3. Appareil de prise de vue selon la revendication 1, comprenant en outre une boucle à blocage de phase (123) pour recevoir le dit signal de synchronisation et pour fournir un autre signal de synchronisation correspondant au dit signal de synchronisation, et dans lequel la dite caméra de télévision (124) est activée par le signal de synchronisation venant de la dite boucle à blocage de phase.

4. Appareil de prise de vue selon la revendication 1, comprenant en outre des moyens de porte (125) disposés dans le chemin de sortie de la dite caméra de télévision (124) et connectés à la dite ligne de communication (130) pour lui fournir le signal d'image, les dits moyens de porte (125) étant prévus pour bloquer le signal d'image venant de la dite caméra de télévision (124).

5. , Système synthétiseur de signal d'image comprenant un appareil de prise de vue selon la revendication 1, dans lequel une pluralité de dits deuxièmes blocs (120) sont connectés au dit premier bloc (110) par la même ligne de communication (130).

6. Système synthétiseur de signal d'image selon la revendication 5, dans lequel les dits moyens d'amenée comprennent un transistor (113) pour changer le potentiel d'une ligne de transmission de signal connectée à la dite ligne de communication (130), en réponse au signal de synchronisation qui a été séparé du premier signal d'image par le dit premier circuit de séparation synchrone (111).
